# EUROPEAN PATENT APPLICATION

(11) **EP 4 449 866 A1**
(43) Date of publication of application: **23.10.2024**
(21) Application number: 22907511.4
(22) Date of filing: 15.12.2022
(51) Int. Cl.: A01N 37/46, A01N 43/56, A01N 43/80, A01M 1/20, A01N 47/38, A01N 53/08

(54) **METHOD FOR CONTROLLING NOXIOUS ARTHROPODS**

(30) Priority: 16.12.2021 JP 2021203999
(71) Applicant: Sumitomo Chemical Company, Limited, Tokyo 103-6020 (JP)
(72) Inventor: NAMBA, Yusuke, Takarazuka-shi, Hyogo 665-8555 (JP)
(74) Representative: Vossius & Partner Patentanwälte Rechtsanwälte mbB
(86) International application number: PCT/JP2022/046217
(87) International publication number: WO 2023/112988

(57) **Abstract**

The present invention provides a method for controlling a harmful arthropod showing resistance to at least one kind(s) of insecticide(s) selected from Group B, characterized by applying at least one compound(s) selected from Group A to said harmful arthropod showing resistance, or a habitat thereof, or a place where said harmful arthropod showing resistance is expected to appear:
Group A: a group consisting of broflanilide, nicofluprole, isocycloseram, and cyproflanilide;
Group B: a group consisting of fluxametamide, pyrethroid compound(s), oxadiazine compound(s), and phenylpyrazole compound(s).

## Description

### TECHNICAL FIELD

This application claims the priority to and the benefit of Japanese Patent Application No. 2021-203999 filed on December 16, 2021, the entire contents of which are incorporated herein by reference.

The present invention relates to methods for controlling drug-resistant harmful arthropods.

### BACKGROUND ART

To date, various drugs have been used in order to control harmful arthropods, but it is reported that the development of drug-resistance can be a barrier to controlling the harmful arthropods (NON-PATENT DOCUMENT 1).

### CITATION LIST

### NON-PATENT DOCUMENT

NON-PATENT DOCUMENT 1: Global Pesticide Resistance in Arthropods (published by CABI) p.12-14; ISBN 9781845933531

### SUMMARY OF THE INVENTION

### PROBLEMS TO BE SOLVED BY INVENTION

The present invention provides effective methods for controlling drug-resistant harmful arthropods.

### MEANS TO SOLVE PROBLEMS

The present invention includes, but is not limited to the following aspects.
[1] A method for controlling a harmful arthropod showing resistance to at least one kind(s) of insecticide(s) selected from Group B, characterized by applying at least one compound(s) selected from Group A to said harmful arthropod showing resistance, or a habitat thereof, or a place where said harmful arthropod showing resistance is expected to appear (hereinafter also abbreviated as "Present control method"):
   Group A: a group consisting of broflanilide, nicofluprole, isocycloseram, and cyproflanilide;
   Group B: a group consisting of fluxametamide, pyrethroid compound(s), oxadiazine compound(s), and phenylpyrazole compound(s).
[2] The method according to [1], wherein the pyrethroid compound(s) in Group B is at least one compound(s) selected from the group consisting of permethrin, deltamethrin, cyhalothrin, cyfluthrin, cypermethrin, etofenprox, bifenthrin, and esfenvalerate.
[3] The method according to [1], wherein the pyrethroid compound(s) in Group B is at least one compound(s) selected from the group consisting of permethrin and deltamethrin.
[4] The method according to any one of [1] to [3], wherein the oxadiazine compound(s) in Group B is indoxacarb.
[5] The method according to any one of [1] to [4], wherein the phenylpyrazole compound(s) in Group B is fipronil.
[6] The method according to [1], wherein the at least one kind(s) of insecticide(s) selected from Group B is fluxametamide.
[7] The method according to any one of [1] to [6], wherein said harmful arthropod showing resistance is a resistant German cockroach.

### EFFECT OF INVENTION

According to the present invention, drug-resistant harmful arthropods can be more effectively controlled.

### MODE FOR CARRYING OUT THE INVENTION

First, at least one compound(s) selected from Group A and at least one kind(s) of insecticide(s) selected from Group B are explained.

The compound in Group A (hereinafter also abbreviated as "Compound A") and the insecticide in Group B (hereinafter also abbreviated as "Compound B") are all known compounds, and disclosed in, for example, "The Pesticide Manual 18th-Edition (published by BCPC) ISBN 978-1-9998966-1-4", Recent Highlights in the Discovery and Optimization of Crop Protection Products (published by Academic Press) p.170-171; ISBN 978-0-12-821035-2, WO 2015/067646, or WO 2020/030092. These compounds can be prepared according to known methods. The Compound A and the Compound B may optionally have stereoisomers such as enantiomers and diastereomers. In the present description, each of the terms "Compound A" and "Compound B" refers to any one of the above stereoisomers or mixtures of stereoisomers at any ratio.

Examples of the compound(s) selected from Group A include the following aspects.

An aspect wherein the compound(s) selected from Group A is broflanilide, nicofluprole, isocycloseram, or cyproflanilide.

An aspect wherein the compound(s) selected from Group A is broflanilide.

An aspect wherein the compound(s) selected from Group A is nicofluprole.

An aspect wherein the compound(s) selected from Group A is isocycloseram.

An aspect wherein the compound(s) selected from Group A is cyproflanilide.

An aspect wherein the compound(s) selected from Group A is broflanilide or nicofluprole.

An aspect wherein the compound(s) selected from Group A is isocycloseram or cyproflanilide.

An aspect wherein the compound(s) selected from Group A is broflanilide, nicofluprole, or cyproflanilide.

An aspect wherein the compound(s) selected from Group A is broflanilide, isocycloseram, or cyproflanilide.

The Compound A is typically used by mixing it with auxiliary agent(s) for formulation to be formulated into a control agent. For example, an active ingredient Compound A is used by mixing it with inert carrier(s) to be formulated into a composition (hereinafter referred to as "Composition X"). The Composition X is typically used by mixing the Compound A with appropriate auxiliary agent(s) for formulation selected from the group consisting of solid carriers, liquid carriers, surfactants, and the like, and as needed, adding further thereto optional auxiliary agent(s) for formulation selected from the group consisting of binders, dispersants, stabilizers, gases, and the like to be formulated into an aqueous suspension formulation, an oil-based suspension formulation, an emulsifiable concentrate, an emulsion formulation, a microemulsion formulation, a microcapsule formulation, a wettable powder, a water dispersible granule, a dust formulation, a granule, a tablet, an aerosol formulation, a resin formulation, or the like. In addition to these formulations, the Compound A may be used by formulating it into a dosage form described in Manual on development and use of FAO and WHO Specifications for pesticides, FAO Plant Production and Protection Papers-271-276, prepared by the FAO/WHO Joint Meeting on Pesticide Specifications, 2016, ISSN:0259-2517.

The Composition X usually comprises 0.01 to 99.9% by weight ratio, preferably 0.01 to 50% by weight ratio, and more preferably 0.01 to 20% by weight ratio of the Compound A.

The Composition X may be used by formulating it to, for example, spray agents (for example, aerosols, pump spray agents, ultrasonic vibration type preparations, and electrostatic spray type preparations), poison baits, combustion agents (for example, incense sticks), heating transpirators (for example, electric mosquito repellent mats and liquid mosquito repellent preparations), blowing type transpirators (for example, fan type mosquito repellent preparations), smoke agents (for example, self-burning smoke agents, chemical reaction type smoke agents, and porous ceramic plate fumigants), fumigants, smoke fog agents, ULV agents, mist agents, foam agents, pasty preparations, paints, wood protective paints, sealants, carbon dioxide preparations, sheet preparations, tape preparations, paper preparations, nonwoven fabric preparations, animal collars, animal ear tags, shampoo agents, spot-on agents, pour-on agents, suppositories, injections, oral treatment agents (for example, capsules, tablets, chewable agents, and feed), sublimation tablets, mosquito nets, inducing strings, horticultural struts, and screen doors.

These formulations (i.e., formulations formulated from the Composition X) usually comprise 0.0001 to 99%, preferably 0.1 to 99%, and more preferably 0.2 to 90% by weight ratio of the Compound A.

The above inert carriers may be inert solid carriers or inert liquid carriers.

Examples of the solid carriers include the followings.

Inorganic materials: minerals (for example, natural silicate, marble, pumice, limestone, rare earth minerals, cryolite, activated clay, lime, activated carbon, talc, attapulgite, sodium montmorillonite, calcium montmorillonite, kaolinite, calcite, dolomite, diatomite, bentonite, zeolite, sepiolite, pyrophyllite, vermiculite, crystalline silica, and amorphous silica), silicon dioxide, calcium sulfate, magnesium sulfate, barium sulfate, magnesium oxide, aluminum oxide, ammonium sulfate, ammonium phosphate, ammonium nitrate, calcium phosphate, sulfur, calcium carbonate, sodium hydrogen carbonate, sodium carbonate, synthetic silicate, and ground products of them;

Organic materials: grain powders (for example, rice bran, rice flour, corn powder, and wheat flour), saccharides (for example, cellulose, starch, lactose, glucose, fructose, and sucrose), plant-derived powders (nutshell ground products (for example, nutshell ground products of coconut, walnut, peanut, or the like), tree-based powders (for example, bark powder and sawdust), and other plant ground products (for example, tobacco stem, soybean, and cottonseed shell)), lignin, wax, seashell, urea, polyethylene, polypropylene, polyvinyl alcohol, polycarbonate, polyester, polyamide, polyurethane, polyvinyl chloride, polyvinyl acetate, ethylene-vinyl acetate copolymer, ethylene-methyl methacrylate copolymer, polyvinylpyrrolidone-methacrylic acid copolymer, polyvinylpyrrolidone-vinyl acetate copolymer, cellulose derivatives, phenolic resin, melamine resin, and epoxy resin.

The above solid carrier(s) may be used as adsorbing carrier(s).

Examples of the liquid carriers include water, aliphatic hydrocarbons (for example, hexane, 1-hexene, cyclohexane, octane, isooctane, 1-heptene, d-limonene, pinene, and hexadecane), aromatic hydrocarbons (for example, alkyl benzene (for example, toluene, xylene, isopropylbenzene, and p-diethylbenzene), derivatives of alkyl benzene, alkyl naphthalene, derivatives of alkyl naphthalene, and tetrahydronaphthalene), chlorinated hydrocarbons (for example, monochloroethylene, dichloroethylene, trichloroethylene, tetrachloroethylene, dichloromethane, 1,1,1-trichloroethane, 1,1,2-trichloroethane, and 1,2-dichloropropane), ketones (for example, cyclohexanone, acetone, 2-heptanone, isophorone, mesityl oxide, methyl isoamyl ketone, methyl ethyl ketone, methyl isobutyl ketone, acetophenone, diacetone alcohol, and methylcyclohexanone), esters (for example, fatty acid ester (for example, ethyl acetate, butyl acetate, amyl acetate, isoamyl acetate, isobornyl acetate, hexyl acetate, heptyl acetate, octyl acetate, isopropyl myristate, methyl octanoate, methyl oleate, methyl laurate, dibutyl adipate, tributyl citrate, and dibutyl phthalate), lactic acid esters (for example, ethyl lactate and propyl lactate), carbonate esters (for example, ethylene carbonate, propylene carbonate, butylene carbonate, diethyl carbonate, and dibutyl carbonate), esterified polyols (for example, glycerol acetate, glycol acetate, glycerin monoacetate, glycerin diacetate, glycerin triacetate, diethylene glycol abietate, dipropylene glycol dibenzoate, and dipropylene glycol monomethyl ester), lactones (for example, γ-butyrolactone), ethers (for example, 1,4-dioxane, tetrahydrofuran, dipropylene glycol methyl ether, ethylene glycol methyl ether, and propylene glycol methyl ether), amides(N-octyl-caprolactam, N-dodecyl-caprolactam, N,N-dimethylformamide, fatty acid dimethylamides (for example, N,N-dimethylacetamide, N,N-dimethyldecanamide, and N,N-dimethyloctanamide), alkyl pyrrolidones (for example, N-methylpyrrolidone, N-octyl-pyrrolidone, and N-dodecyl-pyrrolidone), lactams (for example, α-lactam, β-lactam, γ-lactam, and δ-lactam), amines (for example, octylamine, octylamine acetate, oleylamine, diethanolamine, and laurylamine), alcohols (for example, methanol, ethanol, butanol, propanol, isopropanol, butanol, amyl alcohol, hexanol, heptanol, octanol, 2-ethylhexanol, hexylene glycol, cyclohexanol, phenol, benzyl alcohol, methoxypropanol (1-methoxy-2-propanol), tetrahydrofurfuryl alcohol, furfuryl alcohol, polyethylene glycol, ethylene glycol, diethylene glycol, hexylene glycol, ethylene glycol methyl ether, diethylene glycol methyl ether, diethylene glycol butyl ether, triethylene glycol, propylene glycol methyl ether, dipropylene glycol, ethylene glycol monomethyl ether, ethylene glycol monoethyl ether, ethylene glycol butyl ether, dipropylene glycol methyl ether, dipropylene glycol ether, dipropylene glycol monomethyl ether, and glycerin), mineral oils (for example, naphtha, petroleum ether, kerosene, diesel oil, paraffin, and olefin), animal and plant-derived oils, plant-derived oils (for example, palm oil, rapeseed oil, castor oil, coconut oil, soybean oil, and derivatives of them), animal-derived oils (for example, sardine oil, saury oil, whale oil, and derivatives of them), dimethyl sulfoxide, silicone oil, acetonitrile, propanenitrile, acid anhydrides (for example, acetic anhydride), triethyl phosphate, oleic acid, propionic acid, lactic acid, and xylene sulfonic acid.

Each of these solid carriers and liquid carriers may be used alone or in combination of two or more of them.

Examples of the surfactants include anionic surfactants, cationic surfactants, amphoteric ionic surfactants, and non-ionic surfactants.

Examples of the anionic surfactants include carboxylic acids, sulfonic acids, sulfate esters, and phosphate esters, and specific examples thereof include the followings.

Carboxylic acids: fatty acid salts (for example, octanoate, decanoate, laurate, myristate, palmitate, stearate, behenate, and oleate), polyoxyethylene alkyl ether carboxylates (for example, laureth-3-carboxylate and α-(carboxymethyl)-ω-(dodecyloxy)poly(oxyethylene) salt), N-acylsarcosine salts (for example, N-lauroyl sarcosine salt), N-acylglutamates (for example, N-lauroyl glutamate), polycarboxylates (for example, polyacrylate, polyvinyl acetate, and comb polymers of polyacid salts), derivatives of them, and the others;

Sulfonic acids: alkyl sulfonic acids and salts thereof (for example, dodecyl sulfonate), alpha olefin sulfonates (for example, alkene(C14-18) hydroxysulfonates, alkapolyene(C12-20) hydroxysulfonates, alkene(C14-18) hydroxysulfonates, alkene(C12-20) hydroxysulfonates, tetradecene-1-sulfonate, and α-olefin(C14-16) sulfonates), alkylbenzene sulfonates (for example, decylbenzenesulfonate, dodecylbenzenesulfonate, tridecylbenzenesulfonate, and diphenylsulfonate), alkyl naphthalenesulfonates (for example, naphthalenesulfonate, 6-methyl-2-naphthalenesulfonate, dibutylnaphthalenesulfonate, 2,2'-dinaphthylmethane-6,6'-disulfonate, diisopropylnaphthalenesulfonate, triisopropylnaphthalenesulfonate, and 1-isopropyl 2-naphthalene sulfonate), sulfosuccinic acid, monoalkyl sulfosuccinates, dialkyl sulfosuccinates (for example, di(2-ethylhexyl)sulfosuccinate), N-methyl-N-acyltaurine salts (for example, oleoyl methyl taurate), lignin sulfonate, alkylphenol sulfonates, naphthalenesulfonate-formaldehyde condensates, benzimidazole sulfonate, and derivatives of them;

Sulfate esters: alkyl sulfates (for example, hexyl sulfate, heptyl sulfate, octyl sulfate, lauryl sulfate, lauryl sulfate diethanol salt, hexadecyl sulfate, and octadecyl sulfate), polyoxyethylene alkyl ether sulfuric acids and salts thereof (for example, laureth-3-sulfate, polyoxyethylene monotridecyl ether sulfate, α-sulfo-ω-hydroxyalkyl(C6-10) ether poly(oxyethylene) salt), polyoxyethylene alkyl phenyl ether sulfates (for example, poly(oxyethylene) 2-decyl phenyl ether sulfate, poly(oxyethylene) 3-decyl phenyl ether sulfate, and α-sulfo-ω-[2,4-bis(1,1,3,3-tetramethylbutyl)phenoxy]poly(oxyethylene) salt), polyoxypropylene alkyl ether sulfates, lignosulfite effluents, and derivatives of them;

Phosphate esters: alkyl phosphates (for example, propyl phosphate, hexadecyl phosphate, lauryl phosphate, and dioctyl phosphate), polyoxyethylene alkyl ether phosphates (for example, polyoxyethylene decyl phosphate ester and α-phosphono-ω-butoxypoly(oxyethylene)), polyoxyethylene alkyl phenyl ether phosphates (for example, α-(dinonylphenyl)-ω-hydroxypoly(oxyethylene) phosphate ester, α-(dodecylphenyl)-ω-hydroxypoly(oxyethylene) phosphate ester, and α-(nonylphenyl)-ω-hydroxypoly(oxyethylene) phosphate ester), polyoxypropylene alkyl ether phosphates, and derivatives of them.

Examples of the cationic surfactants include amine salts and quaternary ammonium salts, and specific examples thereof include the followings.

Amine salts: alkylamine salts (for example, monomethylamine salt, dimethylamine salt, and trimethylamine salt), fatty acid amide amine salts (for example, stearamidopropyl dimethylamine and behenamidopropyl dimethylamine), polyamine salts (for example, polyvinylamine and polyethyleneimine), and derivatives of them;

Quaternary ammonium salts: lauryl trimethylammonium salt, cetyltrimethylammonium salt, dodecyl trimethylammonium salt, stearyltrimethylammonium salt, benzalkonium chloride, benzethonium chloride, and benzylbis(2-chloroethyl)ethylammonium bromide salt.

Examples of the amphoteric ionic surfactants include betaine, alkyl betaines, alkyldimethyl betaines, imidazoline, taurine, alkyl taurines, dodecyl dimethylammonioacetate, 4-carboxy-N,N,N-trimethyl-1-butanaminium, 1-carboxy-N,N,N-2-tetramethyl-1-propananium, N-alkyl(or alkenyl)(C12-18) glycine and salts thereof, N-dodecylglycine and salts thereof, and derivatives of them.

Examples of the non-ionic surfactants include alcohols, amides, amines, esters, ethers, etheresters, and carboxylic acids, and specific examples thereof include the followings.

Alcohols: aromatic alcohols (for example, alkylphenols (for example, allyl phenol, octylphenol, nonylphenol, and octylcresol), and acylphenols), aliphatic alcohols (for example, isotridecyl alcohol, oleyl alcohol, and cetyl alcohol), polyhydric alcohols (for example, polysaccharides, starch, starch derivatives, sucrose, alkyl polyglucosides, sorbitan, ethoxylated sorbitan, cellulose derivatives, and gum arabic), synthetic polymers (for example, polyvinyl alcohol and polyethylene glycol);

Amides: alkanolamide (for example, fatty acid alkanolamides (for example, lauric acid diethanolamide), fatty acid glucamides (for example, alkoxylated propylene oxide fatty acid glucamide), alkoxylated amides (for example, polyoxyethyleneoleic acid amide and polyoxyethylene stearate amide), synthetic polymers (for example, polyvinylpyrrolidone);

Amines: alkoxylated amines (for example, polyoxyethyleneoleylamine and α,α'-[(9-octadecenylimino)di(2,1-ethanediyl)]bis(ω-hydroxy) polyoxyethylene) ;

Esters: fatty acid esters (for example, fatty acid esters of polyols, monoglyceride, and phospholipid), sugar-derived esters (for example, sucrose fatty acid esters (for example, sucrose stearate diester), sorbitan fatty acid esters (for example, sorbitan oleic acid monoester), glucose esters, and cellulose esters), synthetic polymers (for example, vinyl acetate copolymers, polymethacrylic acid, and copolymers of methacrylic acid and methacrylic acid ester);

Ethers: alcohol ethoxylates (for example, aliphatic alcohol ethoxylates (for example, tridecyl alcohol ethoxylate, isooctyl alcohol ethoxylate, lauryl alcohol ethoxylate, hexadecyl alcohol ethoxylate, and stearyl alcohol ethoxylate)), alkylphenol ethoxylates (for example, nonylphenol ethoxylate, tristyrylphenol ethoxylate, tributylphenol ethoxylate, and octylphenol ethoxylate), arylalkylphenol ethoxylates, arylphenol ethoxylates (for example, monobenzylbiphenol alcohol ethoxylate), alcohol propoxylates (for example, aliphatic alcohol propoxylates, alkylphenol propoxylates, and arylalkylphenol propoxylates), block polymers (for example, block polymers of polyethylene oxide and polypropylene oxide, polyethylene oxide block polymers, polypropylene oxide block polymers, and block polymers of alkanol and polyethylene oxide and polypropylene oxide);

Etheresters: polyoxyethylene fatty acid esters (for example, polyoxyethylene castor oil ester, polyoxyethylene stearate ester, and polyoxyethylene beef tallow fatty acid ester), polyoxyethylene sorbitan fatty acid esters (for example, polyoxyethylene sorbitan monooleic acid ester, polyoxyethylene sorbitan trioleic acid ester, polyoxyethylene sorbitan monolaurate ester, and polyoxyethylene sorbitan stearate ester), polyoxyethylene fatty acid amine esters, polyoxyethylene rosin esters, polyoxypropylene fatty acid esters (for example, polyoxypropylene castor oil ester), and polyoxypropylene fatty acid amine esters;
Carboxylic acids: undecafluorohexanoic acid.

The content of these surfactants is not specifically limited, but usually the range from 0.05 to 20 part(s) by weight relative to 100 parts by weight of formulation is preferable. Each of these surfactants may be used alone or in combination of two or more of them.

The above control agent may further comprise the following auxiliary agent(s) for formulation optionally selected from thickeners, protective colloid agents, antifreezing agents, antifoaming agents, antifungal agents, preservatives/fungicides, antioxidants, light stabilizers, pH adjusters, binders, fixing agents/spreading agents, lubricants/lubricant agents, anticaking agents, perfumes, coating agents, and clathrating agents.

Examples of the thickeners include polysaccharides (for example, xanthan gum, cellulose esters, cellulose ethers, carboxymethylcellulose and salts thereof, dextrin, starch, guar gum, gum arabic, hydroxypropyl guar gum, chilose, and carrageenan), clays (for example, organic clays, organic modified clays, inorganic clays, and inorganic modified clays), minerals (for example, bentonite, attapulgite, silica, and silicate) , and synthetic polymers (for example, polycarboxylates, polyacrylic acid derivatives, polyvinylpyrrolidone, and polyvinyl alcohol). Each of these thickeners may be used alone or in combination of two or more of them.

Examples of the protective colloid agents include water-soluble celluloses such as methylcellulose, hydroxyethylcellulose, hydroxypropyl cellulose, hydroxypropylmethylcellulose and carboxymethylcellulose; polyalkylene glycols such as polyethylene glycol and polypropylene glycol; polyvinyl alcohol, polyvinylpyrrolidone, guar gum, gum arabic, gelatin, polyacrylate, and alginates. Each of these protective colloid agents may be used alone or in combination of two or more of them.

Examples of the antifreezing agents include alcohols (for example, ethylene glycol, propylene glycol, dipropylene glycol, triethylene glycol, ethylene glycol methyl ether, propylene glycol methyl ether, dipropylene glycol methyl ether, ethylene glycol butyl ether, glycerin, and polyethylene glycol), esters (for example, dipropylene glycol dibenzoate, glycerol acetate, glycerol diacetate, glycerol triacetate, and γ-butyrolactone), ethers (for example, 1,4-dioxane), and urea. Each of these antifreezing agents may be used alone or in combination of two or more of them.

Examples of the antifoaming agents include silicones (for example, polysiloxane, diblock ethoxysiloxane, and triblock ethoxysiloxane), alkyl sulfosuccinates, higher alcohols, higher alcohol derivatives, salts of fatty acids, and fatty acid derivatives. Each of these antifoaming agents may be used alone or in combination of two or more of them.

Examples of the antifungal agents include benzothiazole derivatives, sorbic acid, potassium sorbate, and butyl p-oxybenzoate. Each of these antifungal agents may be used alone or in combination of two or more of them.

Examples of the preservatives/fungicides include phenols (for example, ortho-phenylphenol, thymol, 3,5-dimethyl-4-chlorophenol, 2-isopropyl-5-methylphenol, and 3-methyl-4-isopropylphenol), isothiazolinone derivatives (for example, alkyl isothiazolinones (for example, 5-chloro-2-methylisothiazolinone, 2-methylisothiazolinone, N-octyl isothiazolinone, and 4, 5-dichloro-2-octyl-4-isothiazolin-3-one), and benzisothiazolinone (for example, 1,2-benzisothiazolinone and N-n-butylbenzisothiazolinone)), bronopol derivatives (for example, bronopol (2-bromo-2-nitropropane-1,3-diol)), benzyl alcohol hemiformal, parabens (for example, methylparaben, ethylparaben, propylparaben, isopropylparaben, butylparaben, isobutylparaben, heptylparaben, and benzylparaben), imidazoles (for example, thiabendazole and 2-(4-thiazolyl)benzimidazole), methyl 2-benzimidazolylcarbamate, benzalkonium chloride, didecyldimethylammonium chloride, glyceryl caprylate, glyceryl caprate, glycerin fatty acid esters, sodium dehydroacetate, hinokitiol, silver zeolite, silver salt, methylene bisthiocyanate, 2-bromo-2-nitropropane-1,3-diol, glutaraldehyde, iodopropynyl butyl carbamate, 1,2-dibromo-2,4-dicyanobutane, chlorhexidine gluconate, polyhexamethylene biguanide, parachlorometaxylenol, parachlorometacresol, polylysine, tetrachloroisophthalonitrile, diiodomethylparatolyl sulfone, parachlorophenyl-3-iodopropargylformal, 2,3,5,6-tetrachloro-4-(methylsulfonyl)pyridine, lanthanum chloride, rare earth salts (for example, scandium salts, yttrium salts, lanthanum salts, cerium salts, praseodymium salts, neodymium salts, samarium salts, europium salts, gadolinium salts, terbium salts, dysprosium salts, holmium salts, erbium salts, thulium salts, ytterbium salts, and lutetium salts, formed with counterions such as chloride salts, sulfates, nitrates, bromide salts, iodide salts, carbonates, phosphates, organic acid salts, and hydroxide salts, wherein examples of the organic acid salts include salts of monovalent or divalent carboxylic acids and hydroxy acids, and specific examples of the hydroxy acids include lactic acid, gluconic acid, tartaric acid, citric acid, malic acid, and salicylic acid, and specific examples of the monovalent or divalent carboxylic acids include acetic acid, propionic acid, malonic acid, succinic acid, glutaric acid, adipic acid, azelaic acid, sorbic acid, benzoic acid, and phosphoric acid and salts thereof). Each of these preservatives/fungicides may be used alone or in combination of two or more of them.

Examples of the antioxidants include phenols (for example, 2,6-di-t-butyl-p-cresol and 2,2'-methylenebis(4-methyl-6-t-butylphenol)), amines (for example, p,p'-dioctyldiphenylamine and N,N'-diphenyl-p-phenylenediamine), dibutylhydroxytoluene, butylhydroxyanisole, sodium erythorbate, sodium sulfite, potassium sulfite, potassium pyrosulfite, catechin, propyl gallate, sulfurs (for example, didodecyl thiodipropionate), phosphoric acids (for example, trisnonylphenylphosphite), and vitamins (for example, alpha-tocopherol, L-ascorbic acid, sodium ascorbate, and ascorbyl palmitate). Each of these antioxidants may be used alone or in combination of two or more of them.

Examples of the light stabilizers include titanium oxide, zinc oxide, activated carbon, carbon black, ethylhexyl methoxycinnamate, tert-butylmethoxydibenzoylmethane, hindered amines, ferulic acid, phenyl hydroxybenzoate, ethyl para-aminobenzoate, octyl salicylate, tert-butylphenyl salicylate, 4-tert-octylphenyl salicylate, 2-cyano-3,3-diphenylprop-2-enoic acid 2-ethylhexylester (octocrylene), drometrizole trisiloxane, 2,4,6-tris[4-(2-ethylhexyloxycarbonyl)anilino]-1,3,5-triazine (octyltriazone, TEAT), 2,2'-methylenebis[6-(2H-benzotriazol-2-yl)-4-(1,1,3,3-tetramethylbutyl)phenol] (MBP), 2-ethylhexyl paradimethylaminobenzoate (EDB), homomenthyl salicylate (HS), phenylbenzimidazole sulfonic acid (PBS), hydroxymethoxybenzophenone sulfonic acid (oxybenzone 4, OXB4), sodium hydroxymethoxybenzophenone sulfonate (oxybenzone 5, OXB5), sodium dihydroxydimethoxybenzophenone disulfonate (oxybenzone 9, OXB9), tetrahydroxybenzophenone, dihydroxybenzophenone, dihydroxydimethoxybenzophenone, 2-hydroxy-4-methoxybenzophenone, dimethoxybenzylidene dioxoimidazolidine-2-ethylhexyl propionate, 2,4-dihydroxybenzophenone, and bis(2-methoxy-4-hydroxy-5-benzoylphenyl) methane. Each of these light stabilizers may be used alone or in combination of two or more of them.

Examples of the pH adjusters include sulfuric acid, nitric acid, hydrochloric acid, acetic acid, carbonic acid, oxalic acid, lactic acid, succinic acid, gluconic acid, citric acid, phosphoric acid, sorbic acid, and salts thereof; and sodium hydrogen carbonate, sodium hydroxide, potassium hydroxide, calcium hydroxide, aluminum hydroxide, copper hydroxide, and magnesium hydroxide. Each of these pH adjusters may be used alone or in combination of two or more of them.

Examples of the binders include polysaccharides (for example, xanthan gum, cellulose ester, cellulose ether, carboxymethylcellulose, hydroxypropyl guar gum, guar gum, natural gum arabic, synthetic gum arabic, dextrin, starch, and carrageenan), clays (for example, organic clay, organic modified clay, inorganic clay, and inorganic modified clay), minerals (for example, bentonite), synthetic polymers (for example, polycarboxylic acid and salts thereof, polyvinylpyrrolidone, polyvinyl acetate, polyvinyl alcohol, and polyacrylic acid and salts thereof), and waxes (for example, vegetable oils and fats, animal oils and fats, and derivatives of them, paraffins, and olefins). Each of these binders may be used alone or in combination of two or more of them.

Examples of the fixing agents/spreading agents include the above surfactants and liquid carriers (for example, esters (for example, alkyl fatty acid esters, sorbitan fatty acid esters, ethoxylated fatty acid esters, and ethoxylated sorbitan fatty acid esters), alcohols (for example, ethoxylated aliphatic alcohols and ethoxylated sorbitan aliphatic alcohols), waxes (for example, vegetable oils and fats, animal oils and fats, and derivatives of them, paraffins, and olefins), vegetable oils (for example, alkylated vegetable oils), mineral oils (for example, naphtha), silicone emulsion, synthetic polymers (for example, styrene-butadiene copolymer, methyl methacrylate-butadiene copolymer, polyacrylic acid and salts thereof, polyvinyl acetate, polyvinyl alcohol, polyvinylpyrrolidone, polyethylene glycol, and polypropylene glycol), and natural polymers (for example, xanthan gum, cellulose ester, cellulose ether, carboxymethylcellulose and salts thereof, dextrin, starch, guar gum, gum arabic, hydroxypropyl guar gum, and chilose)). Each of these fixing agents/spreading agents may be used alone or in combination of two or more of them.

Examples of the lubricants/lubricant agents include alcohols, fatty acid esters, sucrose fatty acid esters, glycerin fatty acid esters, hydrocarbons, paraffin, ethylene wax, aliphatic amides, erucic acid amides, stearic acid amides, oleic acid amides, methylenebisstearic acid amides, ethylenebisstearic acid amides, metal soaps, lead stearate, zinc stearate, calcium stearate, magnesium stearate, mineral oils, vegetable oils, kerosene, and diesel oil described in the above liquid carriers or surfactants. Each of these lubricants/lubricant agents may be used alone or in combination of two or more of them.

Examples of the anticaking agents include the above solid carriers and liquid carriers, calcium phosphate, sodium phosphate, sodium carbonate, sodium silicate, calcium silicate, magnesium silicate, potassium aluminum silicate, silicon dioxide, talc, sodium aluminosilicate, calcium aluminosilicate, bentonite, stearic acid, dimethylpolysiloxane, powdered cellulose. Each of these anticaking agents may be used alone or in combination of two or more of them.

Examples of the perfumes include hydrocarbons, α-limonene, β-caryophyllene, alcohols, cis-3-hexenol, linalool, farnesol, β-phenylethyl alcohol, aldehydes, 2,6-nonagenal, citral, α-hexylcinnamic aldehyde, ketones, β-ionone, L-carbon, cyclopentadecanone, esters, linalyl acetate, benzyl benzoate, lactones, γ-undecalactone, phenols, eugenols, oxides, rose oxides, acetals, phenylacetaldehyde dimethyl acetal, α-pinene, and β-pinene. Each of these perfumes may be used alone or in combination of two or more of them.

Examples of the coating agents include natural rubber, synthetic rubber, resins (for example, styrene-butadiene copolymer, polyacrylonitrile, polyester, polyamide, polyurethane, polyurea, polyether, rosin, and melamine), waxes (for example, vegetable oils and fats, animal oils and fats, and derivatives of them, paraffin, and olefin), polysaccharides (for example, xanthan gum, cellulose ester, cellulose ether, carboxymethylcellulose and salts thereof, dextrin, starch, guar gum, gum arabic, hydroxypropyl guar gum, chilose, starch xanthate, and carrageenan), and proteins (for example, gelatin). Each of these coating agents may be used alone or in combination of two or more of them.

Examples of the clathrating agents include cyclodextrins, α-cyclodextrin, β-cyclodextrin, and γ-cyclodextrin. Each of these clathrating agents may be used alone or in combination of two or more of them.

A formulation comprising the Compound A may further comprise at least one of generally known other insecticidal active compound(s) and synergist(s), and the other insecticidal active compound(s) and synergist(s) may be one of each of them or two or more of them. Hereinafter, examples of combinations of the Compound A and other insecticidal active compound(s) and/or synergist(s) are described. In the following descriptions, for example, "alanycarb + SX" indicates a combination of alanycarb and SX. Here, the abbreviation of "SX" indicates any one compound selected from the Compound A. Also, all of the following other insecticidal active compounds and synergists are known ingredients, and may be obtained from commercially available formulations, or may be prepared by known methods. Further, the number in parentheses represents the CAS RN (registered trademark).

Combinations of the other insecticidal active compound and SX:
abamectin + SX, acephate + SX, acequinocyl + SX, acetamiprid + SX, acetoprole + SX, acrinathrin + SX, acynonapyr + SX, afidopyropen + SX, afoxolaner + SX, alanycarb + SX, aldicarb + SX, allethrin + SX, alpha-cypermethrin + SX, alpha-endosulfan + SX, aluminium phosphide + SX, amitraz + SX, azadirachtin + SX, azamethiphos + SX, azinphos-ethyl + SX, azinphos-methyl + SX, azocyclotin + SX, bark of Celastrus angulatus + SX, bendiocarb + SX, benfluthrin + SX, benfuracarb + SX, bensultap + SX, benzoximate + SX, benzpyrimoxan + SX, beta-cyfluthrin + SX, beta-cypermethrin + SX, bifenazate + SX, bifenthrin + SX, bioallethrin + SX, bioresmethrin + SX, bistrifluron + SX, borax + SX, boric acid + SX, bromopropylate + SX, buprofezin + SX, butocarboxim + SX, butoxycarboxim + SX, cadusafos + SX, calcium phosphide + SX, carbaryl + SX, carbofuran + SX, carbosulfan + SX, cartap hydrochloride + SX, cartap + SX, chinomethionat + SX, chlorantraniliprole + SX, chlordane + SX, chlorethoxyfos + SX, chlorfenapyr + SX, chlorfenvinphos + SX, chlorfluazuron + SX, chlormephos + SX, chloropicrin + SX, chlorpyrifos + SX, chlorpyrifos-methyl + SX, chromafenozide + SX, clofentezine + SX, clothianidin + SX, concanamycin A + SX, coumaphos + SX, cryolite + SX, cyanophos + SX, cyantraniliprole + SX, cyclaniliprole + SX, cyclobutrifluram + SX, cycloprothrin + SX, cycloxaprid + SX, cyenopyrafen + SX, cyetpyrafen + SX, cyflumetofen + SX, cyfluthrin + SX, cyhalodiamide + SX, cyhalothrin + SX, cyhexatin + SX, cypermethrin + SX, cyphenothrin + SX, cyromazine + SX, dazomet + SX, deltamethrin + SX, demeton-S-methyl + SX, diafenthiuron + SX, diazinon + SX, dichlorvos + SX, dicloromezotiaz + SX, dicofol + SX, dicrotophos + SX, diflovidazin + SX, diflubenzuron + SX, dimefluthrin + SX, dimethoate + SX, dimethylvinphos + SX, dimpropyridaz + SX, dinotefuran + SX, disodium octaborate + SX, disulfoton + SX, DNOC(2-methyl-4,6-dinitrophenol) + SX, doramectin + SX, dried leaves of Dryopteris filix-mas + SX, emamectin-benzoate + SX, empenthrin + SX, endosulfan + SX, EPN(O-ethyl O-(4-nitrophenyl) phenylphosphonothioate) + SX, epsilon-metofluthrin + SX, epsilon-momfluorothrin + SX, esfenvalerate + SX, ethiofencarb + SX, ethion + SX, ethiprole + SX, ethoprophos + SX, etofenprox + SX, etoxazole + SX, extract of Artemisia absinthium + SX, extract of Azadirachta indica + SX, extract of Cassia nigricans + SX, extract of clitoria ternatea + SX, extract of Symphytum officinale + SX, extract of Chenopodium ambrosioides + SX, extract of Tanacetum vulgare + SX, extract of Urtica dioica + SX, extract of Viscum album + SX, famphur + SX, fenamiphos + SX, fenazaquin + SX, fenbutatin oxide + SX, fenitrothion + SX, fenmezoditiaz + SX, fenobucarb + SX, fenoxycarb + SX, fenpropathrin + SX, fenpyroximate + SX, fenthion + SX, fenvalerate + SX, fipronil + SX, flometoquin + SX, flonicamid + SX, fluacrypyrim + SX, fluazaindolizine + SX, fluazuron + SX, flubendiamide + SX, fluchlordiniliprole + SX, flucycloxuron + SX, flucythrinate + SX, fluensulfone + SX, flufenoprox + SX, flufenoxuron + SX, flufiprole + SX, flumethrin + SX, flupentiofenox + SX, flupyradifurone + SX, flupyrimin + SX, fluralaner + SX, fluvalinate + SX, fluxametamide + SX, formetanate + SX, fosthiazate + SX, furamethrin + SX, furathiocarb + SX, gamma-cyhalothrin + SX, GS-omega/kappa HXTX-Hvla peptide + SX, halfenprox + SX, halofenozide + SX, heptafluthrin + SX, heptenophos + SX, hexaflumuron + SX, hexythiazox + SX, potassium salt of hop beta acid + SX, hydramethylnon + SX, hydroprene + SX, imicyafos + SX, imidacloprid + SX, imidaclothiz + SX, imiprothrin + SX, indazapyroxamet + SX, indoxacarb + SX, isofenphos + SX, isoprocarb + SX, isopropyl-O-(methoxyaminothiophosphoryl) salicylate + SX, isoxathion + SX, ivermectin + SX, kadethrin + SX, kappa-tefluthrin + SX, kappa-bifenthrin + SX, kinoprene + SX, lambda-cyhalothrin + SX, lenoremycin + SX, lepimectin + SX, lime sulfur + SX, lotilaner + SX, lufenuron + SX, machine oil + SX, malathion + SX, mecarbam + SX, meperfluthrin + SX, metaflumizone + SX, metam + SX, methamidophos + SX, methidathion + SX, methiocarb + SX, methomyl + SX, methoprene + SX, methoxychlor + SX, methoxyfenozide + SX, methyl bromide + SX, metofluthrin + SX, metolcarb + SX, metoxadiazone + SX, mevinphos + SX, milbemectin + SX, milbemycin oxime + SX, mivorilaner + SX, modoflaner + SX, momfluorothrin + SX, monocrotophos + SX, moxidectin + SX, naled + SX, nicotine + SX, nicotine-sulfate + SX, nitenpyram + SX, novaluron + SX, noviflumuron + SX, oil of the seeds of Chenopodium anthelminticum + SX, omethoate + SX, oxamyl + SX, oxazosulfyl + SX, oxydemeton-methyl + SX, parathion + SX, parathion-methyl + SX, permethrin + SX, phenothrin + SX, phenthoate + SX, phorate + SX, phosalone + SX, phosmet + SX, phosphamidon + SX, phosphine + SX, phoxim + SX, pirimicarb + SX, pirimiphos-methyl + SX, prallethrin + SX, profenofos + SX, profluthrin + SX, propargite + SX, propetamphos + SX, propoxur + SX, propylene glycol alginate + SX, prothiofos + SX, pyflubumide + SX, pymetrozine + SX, pyraclofos + SX, pyrethrins + SX, pyridaben + SX, pyridalyl + SX, pyridaphenthion + SX, pyrifluquinazone + SX, pyrimidifen + SX, pyriminostrobin + SX, pyriprole + SX, pyriproxyfen + SX, quinalphos + SX, resmethrin + SX, rotenone + SX, ryanodine + SX, sarolaner + SX, selamectin + SX, sigma-cypermethrin + SX, silafluofen + SX, sodium borate + SX, sodium metaborate + SX, spidoxamat + SX, spinetoram + SX, spinosad + SX, spirobudifen + SX, spirodiclofen + SX, spiromesifen + SX, spiropidion + SX, spirotetramat + SX, sulfluramid + SX, sulfotep + SX, sulfoxaflor + SX, sulfur + SX, sulfuryl fluoride + SX, tartar emetic + SX, tau-fluvalinate + SX, tebufenozide + SX, tebufenpyrad + SX, tebupirimfos + SX, teflubenzuron + SX, tefluthrin + SX, temephos + SX, terbufos + SX, terpene constituents of the extract of chenopodium ambrosioides near ambrosioides + SX, tetrachlorantraniliprole + SX, tetrachlorvinphos + SX, tetradifon + SX, tetramethrin + SX, tetramethylfluthrin + SX, tetraniliprole + SX, theta-cypermethrin + SX, thiacloprid + SX, thiamethoxam + SX, thiocyclam + SX, thiodicarb + SX, thiofanox + SX, thiometon + SX, thiosultap-disodium + SX, thiosultap-monosodium + SX, tigolaner + SX, tiorantraniliprole + SX, tioxazafen + SX, tolfenpyrad + SX, tralomethrin + SX, transfluthrin + SX, triazamate + SX, triazophos + SX, trichlorfon + SX, trifluenfuronate + SX, triflumezopyrim + SX, triflumuron + SX, trimethacarb + SX, tyclopyrazoflor + SX, umifoxolaner + SX, vamidothion + SX, wood extract of Quassia amara + SX, XMC (3,5-dimethylphenyl N-methylcarbamate) + SX, xylylcarb + SX, zeta-cypermethrin + SX, zinc phosphide + SX, 4-[5-(3,5-dichlorophenyl)-5-(trifluoromethyl)-4,5-dihydro-1,2-oxazol-3-yl]-2-methyl-N-(1-oxothietan-3-yl)benzamide (1241050-20-3) + SX, 3-methoxy-N-(5-{5-(trifluoromethyl)-5-[3-(trifluoromethyl)phenyl]-4,5-dihydro-1,2-oxazol-3-yl}indan-1-yl)propanamide (1118626-57-5) + SX, 2-({2-fluoro-4-methyl-5-[(2,2,2-trifluoroethyl)sulfinyl]phenyl}imino)-3-(2,2,2-trifluoroethyl)-1,3-thiazolidin-4-one (1445683-71-5) + SX, (2Z)-2-({2-fluoro-4-methyl-5-[(R)-(2,2,2-trifluoroethyl)sulfinyl]phenyl}imino)-3-(2,2,2-trifluoroethyl)-1,3-thiazolidin-4-one (2377084-09-6) + SX, N-{4-chloro-3-[(1-cyanocyclopropyl)carbamoyl]phenyl}-1-methyl-4-(methanesulfonyl)-3-(1,1,2,2,2-pentafluoroethyl)-1H-pyrazole-3-carboxamide (1400768-21-9) + SX, N-[3-chloro-1-(pyridin-3-yl)-1H-pyrazol-4-yl]-2-(methanesulfonyl)propanamide (2396747-83-2) + SX, 1,4-dimethyl-2-[2-(pyridin-3-yl)-2H-indazol-5-yl]-1,2,4-triazolidine-3,5-dione (2171099-09-3) + SX, 2-isopropyl-5-[(3,4,4-trifluoro-3-buten-1-yl)sulfonyl]-1,3,4-thiadiazole (2058052-95-0) + SX, N-({2-fluoro-4-[(2S,3S)-2-hydroxy-3-(3,4,5-trichlorophenyl)-3-(trifluoromethyl)pyrrolidin-1-yl]phenyl}methyl)cyclopropanecarboxamide + SX, 7-fluoro-N-[1-(methylsulfanyl)-2-methylpropan-2-yl]-2-(pyridin-3-yl)-2H-indazole-4-carboxamide + SX, 7-fluoro-N-[1-(methanesulfinyl)-2-methylpropan-2-yl]-2-(pyridin-3-yl)-2H-indazole-4-carboxamide + SX, 7-fluoro-N-[1-(methanesulfonyl)-2-methylpropan-2-yl]-2-(pyridin-3-yl)-2H-indazole-4-carboxamide + SX, N-[1-(difluoromethyl)cyclopropyl]-2-(pyridin-3-yl)-2H-indazole-4-carboxamide + SX, 2,9-dihydro-9-(methoxymethyl)-2-(pyridin-3-yl)-10H-pyrazolo[3,4-f]pyrido[2,3-b][1,4]oxazepin-10-one (2607927-97-7) + SX.

Combinations of the synergist and SX:
1-dodecyl-1H-imidazole + SX, N-(2-ethylhexyl)-8,9,10-trinorborn-5-ene-2,3-dicarboximide + SX, bucarpolate + SX, N,N-dibutyl-4-chlorobenzenesulfonamide + SX, dietholate + SX, diethylmaleate + SX, octachlorodipropyl ether + SX, perbutin + SX, piperonyl butoxide + SX, piperonyl cyclonene + SX, piprotal + SX, propyl isome + SX, safroxan + SX, sesamex + SX, sesamolin + SX, sulfoxide + SX, Verbutin + SX, DMC (1,1-bis(4-chlorophenyl)ethanol) + SX, FDMC (1,1-bis(4-chlorophenyl)-2,2,2-trifluoroethanol) + SX, ETN (1,2-epoxy-1,2,3,4-tetrahydronaphthalene) + SX, ETP (1,1,1-trichloro-2,3-expoxypropane) + SX, PSCP (phenylsaligenin cyclic phosphate) + SX, TBPT (S,S,S-tributyl phosphorotrithioate) + SX, TPP (triphenyl phosphate) + SX.

The weight ratio of the Compound A and the total of the other insecticidal active compound(s) and/or synergist(s) is usually 0.01 to 100 part(s) by weight, and preferably 0.02 to 50 part(s) by weight of the other insecticidal active compound(s) and synergist(s) relative to 1 part by weight of the Compound A.

The content of the Compound A in the control agent used in the Present control method is not limited, but usually 0.01 to 99.9% by weight, preferably 0.01 to 50% by weight, and more preferably 0.01 to 20% by weight.

The control agent may be used as itself, or used by appropriately diluting it with water etc. or suspending it into water etc. Usually, as the amount thereof to be used, using at an active ingredient's concentration of 0.0001 to 5000 ppm is preferable, and using at the concentration of 0.01 to 1000 ppm is more preferable.

The above control agent may be used by mixing it with other insecticidal active compound(s), fungicide(s), synergist(s), or the like as needed when applied.

Examples of the places where the above harmful arthropods showing resistance which can be controlled by the Present control method are expected to appear include places where the harmful arthropods can pass through and places where the harmful arthropods can live.

Specific examples of the habitats of the above harmful arthropods showing resistance or places where said harmful arthropods showing resistance are expected to appear include houses, restaurants, commercial facilities, hospitals, stations, airports, factories, offices, schools, accommodations, waste disposal facilities, barns, warehouses, tents, vehicles, airplanes, ships, various products, grounds, forests, pastures, and gutters. More specific examples thereof include walls, ceilings, floors, underfloors, pillars, transoms, windows, doors, and cellulose-containing materials (wooden products) thereof of the above habitats of harmful arthropods showing resistance or places where said harmful arthropods showing resistance are expected to appear illustrated above.

In the Present control method, the application to the habitats of the above harmful arthropods showing resistance or places where said harmful arthropods showing resistance are expected to appear is carried out by spraying, applying, or transpiring the control agent to the above places, or according to combined methods of them.

Examples of the materials of habitats of the above harmful arthropods showing resistance or places where said harmful arthropods showing resistance are expected to appear include, but are not limited to, concrete (cement), brick, bamboo, wood, tile, ceramic, mud, metal, plastic, thatch, and corrugated iron.

The control agent may be applied to surfaces of the habitats of the above harmful arthropods showing resistance or places where said harmful arthropods showing resistance are expected to appear so that the active ingredient can be supported by the surfaces. The amount of the active ingredient to be supported may be appropriately adjusted on the basis of application time, application place, application method, and the like. For example, the amount of the active ingredient per 1 m² is usually 0.1 to 1000 mg, preferably 1 to 500 mg, and more preferably 5 to 300 mg.

In the present description, the wording of "harmful arthropod showing resistance to at least one kind(s) of insecticide(s) selected from Group B" means a harmful arthropod showing resistance to at least one kind(s) of insecticide(s) selected from the group consisting of fluxametamide, pyrethroid compounds, oxadiazine compounds, and phenylpyrazole compounds. Here, the term of "showing resistance" means "having decreased sensitivity". Namely, harmful arthropods showing resistance to at least one kind(s) of insecticide(s) selected from the group consisting of fluxametamide, pyrethroid compounds, oxadiazine compounds, and phenylpyrazole compounds means harmful arthropods having decreased sensitivity to at least one kind(s) of insecticide(s) selected from the group consisting of fluxametamide, pyrethroid compounds, oxadiazine compounds, and phenylpyrazole compounds.

As the pyrethroid compounds, cypermethrin, alpha-cypermethrin, bifenthrin, cyfluthrin, beta-cyfluthrin, lambda-cyhalothrin, deltamethrin, esfenvalerate, etofenprox, prallethrin, permethrin, and pyrethrin are preferable, and permethrin and deltamethrin are more preferable.

Examples of the oxadiazine compounds include indoxacarb.

Examples of the phenylpyrazole compounds include ethiprole and fipronil, and a preferable example thereof is fipronil.

Examples of the insecticides selected from Group B include the following aspects.

An aspect wherein the insecticide selected from Group B is fluxametamide, pyrethroid compound(s), oxadiazine compound(s), or phenylpyrazole compound(s).

An aspect wherein the pyrethroid compound(s) in Group B is at least one compound(s) selected from the group consisting of permethrin, deltamethrin, cyhalothrin, cyfluthrin, cypermethrin, etofenprox, bifenthrin, and esfenvalerate.

An aspect wherein the oxadiazine compound(s) in Group B is indoxacarb.

An aspect wherein the phenylpyrazole compound(s) in Group B is fipronil.

An aspect wherein the insecticide selected from Group B is fluxametamide.

An aspect wherein the insecticide selected from Group B is pyrethroid compound(s).

An aspect wherein the insecticide selected from Group B is permethrin.

An aspect wherein the insecticide selected from Group B is deltamethrin.

An aspect wherein the insecticide selected from Group B is permethrin or deltamethrin.

An aspect wherein the insecticide selected from Group B is permethrin and deltamethrin.

An aspect wherein the insecticide selected from Group B is oxadiazine compound(s).

An aspect wherein the insecticide selected from Group B is indoxacarb.

An aspect wherein the insecticide selected from Group B is phenylpyrazole compound(s).

An aspect wherein the insecticide selected from Group B is permethrin or deltamethrin.

An aspect wherein the insecticide selected from Group B is permethrin and deltamethrin.

An aspect wherein the insecticide selected from Group B is fipronil.

An aspect wherein the insecticide selected from Group B is fluxametamide, pyrethroid compound(s), indoxacarb, or fipronil.

An aspect wherein the insecticide selected from Group B is fluxametamide, permethrin, deltamethrin, indoxacarb, or fipronil.

An aspect wherein the insecticide selected from Group B is fluxametamide, pyrethroid compound(s), oxadiazine compound(s), and phenylpyrazole compound(s).

An aspect wherein the insecticide selected from Group B is fluxametamide, pyrethroid compound(s), indoxacarb, and fipronil.

An aspect wherein the insecticide selected from Group B is fluxametamide, permethrin, deltamethrin, indoxacarb, and fipronil.

Specific examples of the above harmful arthropods showing resistance which can be controlled by the Present control method include the following harmful arthropods showing resistance to at least one kind(s) of insecticide(s) selected from Group B.

### Harmful arthropod

Blattodea:
from the family Ectobiidae, German cockroach (*Blattella germanica*), and the like;
from the family Blattidae, smoky-brown cockroach (*Periplaneta fuliginosa*), American cockroach (*Periplaneta americana*), Australian cockroach (*Periplaneta australasiae*), brown cockroach (*Periplaneta brunnea*), black cockroach (*Blatta orientalis*), Turkestan cockroach (*Blatta lateralis*), brown-banded cockroach (*Supella longipalpa*), and the like;
from the family Termitidae, Japanese termite (*Reticulitermes speratus*), Formosan termite (*Coptotermes formosanus*), Asian subterranean termite (*Coptotermes gestroi*), western drywood termite (*Incisitermes minor*), *Cryptotermes domesticus, Odontotermes formosanus, Neotermes koshunensis, Glyptotermes satsumensis, Glyptotermes nakajimai, Glyptotermes fuscus, Hodotermopsis sjostedti, Coptotermes guangzhouensis, Reticulitermes amamianus, Reticulitermes miyatakei, Reticulitermes kanmonensis, Nasutitermes takasagoensis, Pericapritermes nitobei, Sinocapritermes mushae, Cornitermes cumulans, Reticulitermes flavipes, Cryptotermes brevis, Cryptotermes havilandi, Macrotermes gilvus, Schedorhinotermes medioobscurus, Microcerotermes crassus, Nasutitermes javanicus, Coptotermes kalshoveni, Nasutitermes corniger, Heterotermes tenuis, Coptotermes curvignathus, Coptotermes acinaciformis,* and the like.

Siphonaptera:
from the family Pulicidae, human flea (*Pulex irritans*), cat flea (*Ctenocephalides felis*), dog flea (*Ctenocephalides canis*), oriental rat flea (*Xenopsylla cheopis*), chicken flea (*Echidnophaga gallinacea*), and the like;
from the family Hectopsyllidae, chigoe flea (*Tunga penetrans*) and the like;
from the family Ceratophyllidae, European rat flea (*Nosopsyllus fasciatus*) and the like;

Psocodea:
from the family Trogiidae, larger pale booklouse (*Trogium pulsatorium*) and the like;
from the family Liposcelidae or Liposcelididae, *Liposcelis corrodens, Liposcelis bostrychophila, Liposcelis pearmani, Liposcelis entomophila,* and the like;

Thysanura:
from the family Lepismatidae, oriental silverfish (*Ctenolepisma villosa*), moth fish (*Lepisma saccharina*), and the like.

Acari:
from the family Ixodidae, *Haemaphysalis longicornis, Haemaphysalis flava, Haemaphysalis japonica, Haemaphysalis campanulata,* American dog tick (*Dermacentor variabilis*), *Dermacentor taiwanensis,* Rocky Mountain wood tick *(Dermacentor andersoni), Dermacentor reticulatus, Ixodes ovatus, Ixodes persulcatus,* black-legged tick (*Ixodes scapularis), Ixodes pacificus, Ixodes holocyclus, Ixodes ricinus,* lone star tick (*Amblyomma americanum*), gulf coast tick (*Amblyomma maculatum*), *Rhipicephalus microplus, Rhipicephalus annulatus,* brown dog tick (*Rhipicephalus sanguineus), Rhipicephalus appendiculatus, Rhipicephalus decoloratus* and the like;
from the family Argasidae, fowl tick (*Argas persicus*), *Ornithodoros hermsi, Ornithodoros turicata,* and the like;
from the family Acaridae, cereal mite (*Tyrophagus putrescentiae*), grassland mite (*Tyrophagus similis*), and the like;
from the family Pyroglyphidae, American house dust mite (*Dermatophagoides farinae*), European house dust mite (*Dermatophagoides pteronyssinus*), and the like;
from the family Cheyletidae, *Cheyletus eruditus, Cheyletus malaccensis, Chelacaropsis moored, Cheyletiella yasguri,* and the like;
from the family Psoroptidae, sheep scab mite (*Psoroptes ovis*), horse psoroptic mange mite (*Psoroptes equi*), *Knemidocoptes mutans,* ear mange mite (*Otodectes cynotis*), *Chorioptes* spp., and the like;
from the family Sarcoptidae, *Notoedres cati, Notoedres muris,* itch mite (*Sarcoptes scabiei*), and the like;
from the family Listrophoridae, *Listrophorus gibbus* and the like;
from the family Dermanyssidae, red mite (*Dermanyssus gallinae*) and the like;
from the family Macronyssidae, northern fowl mite (*Ornithonyssus sylviarum*), tropical rat mite (*Ornithonyssus bacoti*), and the like;
from the family Varroidae, *Varroa jacobsoni* and the like;
from the family Demodicidae, dog follicle mite (*Demodex canis*), cat follicle mite (*Demodex cati*), and the like;
from the family Trombiculidae, *Leptotrombidium akamushi, Leptotrombidium pallidum, Leptotrombidium scutellare,* and the like.

Hymenoptera:
from the family Formicidae, *Solenopsis* spp. (such as red imported fire ant (*Solenopsis invicta*), tropical fire ant (*Solenopsis geminata*) , southern fire ant (*Solenopsis xyloni*), and black imported fire ant (*Solenopsis richteri*)), Atta spp. (such as Brown leaf-cutting ant (Atta *capiguara*)), *Acromyrmex* spp., *Paraponera clavata,* black house ant (*Ochetellus glaber*), little red ant (*Monomorium pharaonis*), Argentine ant (*Linepithema humile*), *Formica japonica, Pristomyrmex punctutus, Pheidole noda,* big-headed ant (*Pheidole megacephala*), *Camponotus* spp. (such as *Camponotus japonicus, Camponotus obscuripes,* black carpenter ant (*Camponotus pennsylvanicus*), Florida carpenter ant (*Camponotus floridanus*), and western carpenter ant (*Camponotus modoc*)), *Pogonomyrmex* spp. (such as harvester ant (*Pogonomyrmex* sp.) and western harvester ant (*Pogonomyrmex occidentalis*)), *Tasmania* spp. (such as *Wasmania auropunctata*)*, Crematogaster* spp., odorous house ant (*Tapinoma sessile*), pavement ant (*Tetramorium caespitum*), pyramid ant (*Dorymyrmex insanus*), European fire ant (*Myrmica rubra*), long-legged ant (*Anoplolepis gracilipes*), and the like;
from the family Vespidae, Asian giant hornet (*Vespa mandarinia*), *Vespa simillima, Vespa analis,* Asian hornet (*Vespa velutina*), *Polistes jokahamae,* and the like;
from the family Siricidae, pine wood wasp (*Urocerus gigas*) and the like;
from the family Bethylidae.

Coleoptera:
from the family Curculionidae, maize wevil (*Sitophilus zeamais*), rice weevil (*Sitophilus oryzae*), grain weevil (*Sitophilus granarius*), and the like;
from the family Tenebrionidae, red meal beetle (*Tribolium castaneum*), mason beetle (*Tribolium confusum*), lesser mealworm (*Alphitobius diaperinus*), and the like;
from the family Bostrychidae, common powder-post beetle (*Lyctus brunneus*), lesser grain borer (*Rhizopertha dominica*), and the like;
from the family Ptinidae;
from the family Cerambycidae, citrus long-horned beetle (*Anoplophora malasiaca*), *Migdolus fryanus,* red-necked longhorn (*Aromia bungii*), and the like;
from the family Elateridae, *Melanotus okinawensis,* barley wireworm (*Agriotes fuscicollis*), *Melanotus legatus, Anchastus* spp., *Conoderus* spp., *Ctenicera* spp., *Limonius* spp., *Aeolus* spp., and the like;
from the family Staphylinidae, *Paederus fuscipes* and the like;
from the family Dermestidae, varied carpet beetle (*Anthrenus verbasci*), hide beetle (*Dermestes maculates*), khapra beetle (*Trogoderma granarium*), and the like;
from the family Anobiidae, tobacco beetle (*Lasioderma serricorne*), biscuit beetle (*Stegobium paniceum*), and the like;
from the family Laemophloeidae, flat grain beetle (*Cryptolestes ferrugineus*) and the like;
from the family Silvanidae, saw-toothed grain beetle (*Oryzaephilus surinamensis*) and the like;
from the family Nitidulidae, common pollen beetle (*Brassicogethes aeneus*) and the like.

Diptera:
from the family Drosophilidae, cherry drosophila (*Drosophila suzukii*), fruit fly (*Drosophila melanogaster*), and the like;
from the family Phoridae, *Megaselia spiracularis* and the like;
from the family Psychodidae, *Clogmia albipunctata* and the like;
from the family Sciaridae, *Bradysia difformis* and the like;
from the family Culicidae, southern house mosquito *(Culex pipiens pallens), Culex tritaeniorhynchus, Culex pipiens* f. *molestus,* brown house mosquito (*Culex quinquefasciatus*), northern house mosquito (*Culex pipiens pipiens*)*, Culex vishnui,* Asian tiger mosquito (Aedes *albopictus*)*,* dengue mosquito (*Aedes aegypti*)*,* Chinese malaria mosquito (*Anopheles sinensis*)*, Anopheles gambiae, Anopheles stephensi,* western malaria mosquito (*Anopheles freeborni*), woodland malaria mosquito (*Anopheles punctipennis*)*,* common malaria mosquito (*Anopheles quadrimaculatus), Anopheles coluzzii, Anopheles albimanus, Anopheles sundaicus, Anopheles arabiensis, Anopheles funestus, Anopheles darlingi, Anopheles farauti, Anopheles minimus,* and the like;
from the family Simulidae, *Prosimulium yezoensis, Simulium ornatum,* black fly (*Simulium* spp.), and the like;
from the family Tabanidae, *Tabanus trigonus,* black horse fly (*Tabanus atratus*), striped horse fly (*Tabanus lineola*), deer fly (*Chrysops* sp.), and the like;
from the family Muscidae, house fly (*Musca domestica*), false stable fly (*Muscina stabulans*), biting house fly (*Stomoxys calcitrans*), buffalo fly (*Haematobia irritans*), and the like;
from the family Calliphoridae, blow fly (*Lucilia* sp. and *Calliphora* sp.) and the like;
from the family Sarcophagidae, flesh fly (*Sarcophaga* sp. and *Wohlfahrtia* sp.) and the like;
from the family Ceratopogonidae, black gnat (*Leptoconops* sp.) and the like;
from the family Chironomidae, *Chironomus plumosus, Chironomus yoshimatsui, Glyptotendipes tokunagai,* and the like;
from the family Fannidae.

Lepidoptera:
from the family Tineidae, casemaking clothes moth (*Tinea transducers*), common clothes moth (*Tineola bisselliella*)*,* and the like.

Hemiptera:
from the family Cimicidae, common bed bug (*Cimex lectularius*), tropical bed bug (*Cimex hemipterus*), and the like;
from the family Cicadidae, *Quesada gigas* and the like;
from the family Reduviidae, *Triatoma infestans, Triatoma rubrofasciata, Triatoma dimidiata,* eastern bloodsucking *conenose* (*Triatoma sanguisuga*), western bloodsucking conenose (*Triatoma protracta*), *Rhodnius prolixus,* and the like.

Araneae:
from the family Eutichuridae, *Cheiracanthium japonicum* and the like;
from the family Theridiidae, red-back spider (*Latrodectus hasseltii*) and the like.

Polydesmida:
from the family Paradoxosomatidae, flat-backed millipede (*Oxidus gracilis*), *Nedyopus tambanus,* and the like.

Isopoda:
from the family Armadillidiidae, common pill bug (*Armadillidium vulgare*) and the like.

Chilopoda:
from the family Scutigeridae, *Thereuonema hilgendorfi* and the like;
from the family Scolopendridae, giant tropical centipede (*Scolopendra subspinipes*) and the like;
from the family Ethopolyidae, *Bothropolys rugosus* and the like.

Aspects of the Present control method include the following methods.

### [Aspect 1]

The Present control method wherein the compound(s) selected from Group A is broflanilide, nicofluprole, isocycloseram, or cyproflanilide.

### [Aspect 2]

The Present control method wherein the compound(s) selected from Group A is broflanilide.

### [Aspect 3]

The Present control method wherein the compound(s) selected from Group A is nicofluprole.

### [Aspect 4]

The Present control method wherein the compound(s) selected from Group A is isocycloseram.

### [Aspect 5]

The Present control method wherein the compound(s) selected from Group A is cyproflanilide.

### [Aspect 6]

The Present control method wherein the compound(s) selected from Group A is broflanilide or nicofluprole.

### [Aspect 7]

The Present control method wherein the compound(s) selected from Group A is isocycloseram or cyproflanilide.

### [Aspect 8]

The Present control method wherein the compound(s) selected from Group A is broflanilide, nicofluprole, or cyproflanilide.

### [Aspect 9]

The Present control method wherein the compound(s) selected from Group A is broflanilide, isocycloseram, or cyproflanilide.

### [Aspect 10]

The Present control method according to any one of the Aspects 1 to 9, wherein the insecticide selected from Group B is fluxametamide, pyrethroid compound(s), oxadiazine compound(s), or phenylpyrazole compound(s).

### [Aspect 11]

The Present control method according to any one of the Aspects 1 to 10, wherein the pyrethroid compound(s) in Group B is at least one compound(s) selected from the group consisting of permethrin, deltamethrin, cyhalothrin, cyfluthrin, cypermethrin, etofenprox, bifenthrin, and esfenvalerate.

### [Aspect 12]

The Present control method according to any one of the Aspects 1 to 11, wherein the oxadiazine compound(s) in Group B is indoxacarb.

### [Aspect 13]

The Present control method according to any one of the Aspects 1 to 12, wherein the phenylpyrazole compound(s) in Group B is fipronil.

### [Aspect 14]

The Present control method according to any one of the Aspects 1 to 9, wherein the insecticide selected from Group B is fluxametamide.

### [Aspect 15]

The Present control method according to any one of the Aspects 1 to 9 and 11, wherein the insecticide selected from Group B is pyrethroid compound(s).

### [Aspect 16]

The Present control method according to any one of the Aspects 1 to 9, wherein the insecticide selected from Group B is permethrin.

### [Aspect 17]

The Present control method according to any one of the Aspects 1 to 9, wherein the insecticide selected from Group B is deltamethrin.

### [Aspect 18]

The Present control method according to any one of the Aspects 1 to 9, wherein the insecticide selected from Group B is permethrin or deltamethrin.

### [Aspect 19]

The Present control method according to any one of the Aspects 1 to 9, wherein the insecticide selected from Group B is permethrin and deltamethrin.

### [Aspect 20]

The Present control method according to any one of the Aspects 1 to 9 and 12, wherein the insecticide selected from Group B is oxadiazine compound(s).

### [Aspect 21]

The Present control method according to any one of the Aspects 1 to 9, wherein the insecticide selected from Group B is indoxacarb.

### [Aspect 22]

The Present control method according to any one of the Aspects 1 to 9 and 13, wherein the insecticide selected from Group B is phenylpyrazole compound(s).

### [Aspect 23]

The Present control method according to any one of the Aspects 1 to 9, wherein the insecticide selected from Group B is permethrin or deltamethrin.

### [Aspect 24]

The Present control method according to any one of the Aspects 1 to 9, wherein the insecticide selected from Group B is permethrin and deltamethrin.

### [Aspect 25]

The Present control method according to any one of the Aspects 1 to 9, wherein the insecticide selected from Group B is fipronil.

### [Aspect 26]

The Present control method according to any one of the Aspects 1 to 9, wherein the insecticide selected from Group B is fluxametamide, pyrethroid compound(s), indoxacarb, or fipronil.

### [Aspect 27]

The Present control method according to any one of the Aspects 1 to 9, wherein the insecticide selected from Group B is fluxametamide, permethrin, deltamethrin, indoxacarb, or fipronil.

### [Aspect 28]

The Present control method according to any one of the Aspects 1 to 9, wherein the insecticide selected from Group B is fluxametamide, pyrethroid compound(s), oxadiazine compound(s), and phenylpyrazole compound(s).

### [Aspect 29]

The Present control method according to any one of the Aspects 1 to 9, wherein the insecticide selected from Group B is fluxametamide, pyrethroid compound(s), indoxacarb, and fipronil.

### [Aspect 30]

The Present control method according to any one of the Aspects 1 to 9, wherein the insecticide selected from Group B is fluxametamide, permethrin, deltamethrin, indoxacarb, and fipronil.

### [Aspect 31]

The Present control method according to any one of the Aspects 1 to 30, wherein the harmful arthropod showing resistance is a resistant German cockroach.

### EXAMPLES

Hereinafter, the present invention is illustrated more in detail by Examples such as Formulation Examples and a Test Example, but the present invention is not limited to these Examples only.

First, Formulation Examples are shown below. The "part(s)" represents "part(s) by weight".

### Formulation Example 1

A mixture of polyoxyethylene alkyl ether sulfate ammonium salt and silica (weight ratio of 1 : 1) (35 parts), SX (10 parts), and water (55 parts) are mixed, and the resulting mixture is subjected to fine grinding according to a wet grinding method to obtain each formulation.

### Formulation Example 2

SX (10 mg) and acetone (0.5 mL) are mixed, the resulting mixture is added dropwise to a solid feed powder for an animal (solid feed powder for rearing and breeding CE-2, manufactured by CLEA Japan, Inc.) (5 g), the resulting mixture is uniformly mixed, and then acetone is dried by evaporation to obtain each poison bait.

### Formulation Example 3

SX (50 parts), calcium lignin sulfonate (3 parts), sodium lauryl sulfate (2 parts), and silica (45 parts) are ground and mixed to obtain each formulation.

### Formulation Example 4

SX (5 parts), polyoxyethylene styryl phenyl ether (9 parts), polyoxyethylene decyl ether (number of added ethylene oxide: 5) (5 parts), calcium dodecylbenzene sulfonate (6 parts), and xylene (75 parts) are mixed to obtain each formulation.

### Formulation Example 5

SX (2 parts), silica (1 part), calcium lignin sulfonate (2 parts), bentonite (30 parts), and kaolin clay (65 parts) are ground and mixed, an appropriate amount of water is added thereto, the resulting mixture is kneaded, subjected to granulation with a granulator, and then dried to obtain each formulation.

### Formulation Example 6

SX (10 parts), and a mixture of benzyl alcohol (18 parts) and DMSO (9 parts) are mixed, GERONOL (registered trademark) TE250 (6.3 parts), Ethylan NS-500LQ (registered trademark) (2.7 parts), and solvent naphtha (54 parts) are added thereto, and the resulting mixture is mixed to obtain each formulation.

### Formulation Example 7

SX (10 parts), nonylphenol ethoxylate (5 parts), and propylene glycol (85 parts) are mixed to obtain each formulation.

### Formulation Example 8

SX (10 parts) and xylene (20 parts) are mixed, and the resulting mixture is dispersed into water (68 parts) comprising polyvinyl alcohol (2 parts) to obtain each formulation.

### Formulation Example 9

SX (30 parts), calcium lignin sulfonate (3 parts), sodium lauryl sulfate (2 parts), and kaolin clay (65 parts) are ground and mixed, an appropriate amount of water is added thereto, the resulting mixture is kneaded, subjected to granulation with a granulator, and then dried to obtain each formulation.

### Formulation Example 10

A mixture of polyoxyethylene alkyl ether sulfate ammonium salt and white carbon (weight ratio of 1: 1) (35 parts), SX (10 parts), and water (55 parts) are mixed and subjected to fine grinding according to a wet grinding method, and the resulting mixture is subjected to granulation with a fluid bed granulator to obtain each formulation.

### Formulation Example 11

SX (20 parts), polyoxyethylene nonylphenyl ether (5 parts), carboxymethyl cellulose (3 parts), and water (72 parts) are mixed to obtain each formulation.

### Formulation Example 12

SX (10 parts), hexamethylene diisocyanate (0.2 part), and xylene (10 parts) are mixed, and the resulting mixture is dispersed into water (75.8 parts) comprising polyvinyl alcohol (2 parts). Ethylenediamine (2 parts) is added thereto, and the resulting mixture is subjected to an encapsulation reaction with mixing to obtain each formulation.

### Formulation Example 13

SX (2 parts), kaolin clay (88 parts), and talc (10 parts) are ground and mixed to obtain each formulation.

### Formulation Example 14

SX (60 parts), a special aromatic sodium sulfonate formalin condensate (Product name: DEMOL SN-B, manufactured by Kao Corporation) (10 parts), sodium lauryl sulfate (Product name: EMAL 10 powder, manufactured by Kao Corporation) (4 parts) and kaolin clay (Product name: A clay, manufactured by Shokozan Mining Co., Ltd.) (26 parts) are mixed, and then the resulting mixture is ground with an air mill.

Next, to said ground product is added water (11 parts), the resulting mixture is thoroughly kneaded, and the resulting kneaded product is subjected to granulation with a small extruding granulator having a screen of 0.7 mmϕ, and drying at 60°C for 10 minutes and sizing to obtain each water dispersible granule.

### Formulation Example 15

SX (50 parts), sodium diisopropylnaphthalenesulphonate (3.0 parts), sulfomethylated sodium ligninsulfonate (4.0 parts), cellulose carboxymethyl ether sodium salt (0.25 part), amorphous silica (1.0 part), and lactose (41.75 parts) are mixed, and then the resulting mixture is ground with an air mill.

Next, to said ground product is added water (10 parts), the resulting mixture is kneaded, and the resulting kneaded product is subjected to granulation with a small extruding granulator having a screen of 1.0 mmϕ, and drying at 60°C for 10 minutes and sizing to obtain each water dispersible granule.

### Formulation Example 16

SX (43.4 parts), a silicone antifoaming agent (Product name: Xiameter ACP-1500 Antifoam compound, manufactured by Dow Corning Toray Co., Ltd.) (0.2 part), polyoxyethylene tristyrylphenyl ether phosphate triethanolamine salt (Product name: Soprophor FL, manufactured by Solvey S.A.) (3.4 parts), propylene glycol (4.3 parts), and ion exchanged water (20.5 parts) are mixed, and the resulting mixture is subjected to wet grinding with a bead mill to obtain each suspension.

Separately, magnesium aluminum silicate (Product name: VEEGUM R, manufactured by Vanderbilt Minerals, LLC) (0.3 part), xanthane gum (Product name: KELZAN, manufactured by CP Kelco) (0.2 part), and preservative (comprising 1,2-benzisothiazolin-3-one as an active ingredient, Product name: Proxel GXL, manufactured by Lonza) (0.2 part) are mixed with and dissolved into / dispersed into ion exchanged water (27.5 parts) to prepare a thickener solution, and the thickener solution is mixed with the above suspension to obtain each aqueous suspension agrochemical composition.

### Formulation Example 17

SX (40 parts), sodium ligninsulfonate (Product name: Reax 85A, manufactured by Ingevity, weight average molecular weight: 10000, degree of sulfonation: 0.8) (5 parts), a silicone antifoaming agent (Product name: Xiameter ACP-1500 Antifoam compound, manufactured by Dow Corning Toray Co., Ltd.) (0.5 part), propylene glycol (5 parts), silica (Product name: Aerosil COK-84, manufactured by Evonik Industries AG) (1 part), and ion exchanged water (48.3 parts) are mixed, and then the resulting mixture is subjected to wet grinding with a horizontal bead mill (Product name: DYNO-MILL KDL, manufactured by WILLY A.BACHOFEN AG Maschinenfabrik) to obtain each suspension.

To the resulting suspension is added a preservative (comprising 1,2-benzisothiazolin-3-one as an active ingredient, Product name: Proxel GXL, manufactured by Lonza) (0.2 part), and mixed to obtain each aqueous suspension composition of the present invention.

Next, the control effects of the present invention are illustrated by a Test Example, but the present invention is not limited to them.

### Test Example 1

An acetone solution comprising a prescribed concentration of each of permethrin, deltamethrin, fipronil, indoxacarb, fluxametamide, broflanilide, nicofluprole, cyproflanilide, or isocycloseram was prepared, and 1 µL of the acetone solution was applied to a ventral surface of thorax of a male adult of German cockroach. Two strains of German cockroaches, i.e., the strain of German cockroaches that is susceptible to insecticides and the strain of German cockroaches that is resistant to multiple insecticides, were used. The strain of German cockroaches that is resistant to multiple insecticides is highly resistant to pyrethroid compounds, phenylpyrazole compounds, and oxadiazine compounds. As the resistance mechanism, the strain has the L993F mutation of voltage-dependent sodium channel resulting in pyrethroid resistance, the A302S mutation of GABAergic chloride ion channel resulting in dieldrin resistance, and enhanced metabolic detoxification activities. The application concentrations were three or more concentrations resulting in 0 to 100% of mortality of insects (comprising one or more concentrations resulting in less than 50% mortality of insects, and one or more concentrations resulting in more than 50% mortality of insects), and the number of test insects per concentration was ten in duplicate. After 4 days, the number of dead German cockroach(es) was investigated, and LD₅₀ value was calculated by the Probit method. The mortalities of insects of 0% and 100% were corrected by the method of Miller and Tainter represented by the following formula (1), and corrected mortalities of insects were used when LD₅₀ values were calculated. The resistance ratio was calculated according to the following formula (2) by using the obtained LD₅₀ values. In this test, a dead insect refers to an insect in which the action was completely stopped. LD₅₀ values obtained in the test are shown in Table 1.Corrected mortality of insects of 0% (%) = 100 × (0.25/n) Corrected mortality of insects of 100% (%) = 100 × (n-0.25/n) [n: Total number of insects]Resistance ratio = LD50 value of resistant strain /LD50 value of susceptible strain

**Table 1**

| Drug | LD₅₀ µg/insect | | Resistance ratio |
|---|---|---|---|
| | Susceptible | Resistant | |
| Deltamethrin | 0.016 | 0.68 | 43 |
| Permethrin | 0.28 | >50 | >180 |
| Fipronil | 0.0034 | 0.14 | 41 |
| Indoxacarb | 0.25 | >50 | >200 |
| Fluxametamide | 0.059 | 2.7 | 46 |
| Broflanilide | 0.0093 | 0.021 | 2.3 |
| Isocycloseram | 0.059 | 0.10 | 1.7 |
| Nicofluprole | 0.0027 | 0.0065 | 2.4 |
| Cyproflanilide | 0.028 | 0.035 | 1.2 |

According to these results, it was demonstrated that each of broflanilide, nicofluprole, cyproflanilide, and isocycloseram can effectively control harmful arthropods showing high resistance to permethrin, deltamethrin, fipronil, indoxacarb, and fluxametamide.

### INDUSTRIAL APPLICABILITY

According to the method of the present invention, harmful arthropods can be easily controlled.

## Claims

1. A method for controlling a harmful arthropod showing resistance to at least one kind(s) of insecticide(s) selected from Group B, **characterized by** applying at least one compound(s) selected from Group A to said harmful arthropod showing resistance, or a habitat thereof, or a place where said harmful arthropod showing resistance is expected to appear:
Group A: a group consisting of broflanilide, nicofluprole, isocycloseram, and cyproflanilide;
Group B: a group consisting of fluxametamide, pyrethroid compound(s), oxadiazine compound(s), and phenylpyrazole compound(s).

2. The method according to claim 1, wherein the pyrethroid compound(s) in Group B is at least one compound(s) selected from the group consisting of permethrin, deltamethrin, cyhalothrin, cyfluthrin, cypermethrin, etofenprox, bifenthrin, and esfenvalerate.

3. The method according to claim 1, wherein the pyrethroid compound(s) in Group B is at least one compound(s) selected from the group consisting of permethrin and deltamethrin.

4. The method according to any one of claims 1 to 3, wherein the oxadiazine compound(s) in Group B is indoxacarb.

5. The method according to any one of claims 1 to 4, wherein the phenylpyrazole compound(s) in Group B is fipronil.

6. The method according to claim 1, wherein the at least one kind(s) of insecticide(s) selected from Group B is fluxametamide.

7. The method according to any one of claims 1 to 6, wherein said harmful arthropod showing resistance is a resistant German cockroach.
